# EUROPÄISCHE PATENTSCHRIFT

(11) **EP 3 424 700 B1**
(45) Veröffentlichungstag und Bekanntmachung des Hinweises auf die Patenterteilung: **21.08.2019**
(21) Anmeldenummer: 18180662.1
(22) Anmeldetag: 29.06.2018
(51) Int. Cl.: B32B 5/02, B32B 5/26, D04H 1/4382, D04H 1/46, D04H 1/492, D04H 1/498, D04H 1/541, D04H 1/559, D04H 3/016, D04H 3/11

(54) **MIKROFASER-VERBUNDVLIESSTOFF**
MICROFIBRE NON-WOVEN MATERIAL
NON-TISSÉ MICROFIBRE

(30) Priorität: 04.07.2017 DE 102017006289
(43) Veröffentlichungstag der Anmeldung: 09.01.2019
(73) Patentinhaber: Carl Freudenberg KG, 69469 Weinheim (DE)
(72) Erfinder: Rutsch, Peter, 69518 Abtsteinach (DE); Frank, Peter, 68782 Brühl (DE); Schneider, Christian, 66871 Etschberg (DE)

(56) Entgegenhaltungen:
- WO-A1-2006/002390
- WO-A1-2006/089619
- WO-A2-01/48278
- WO-A2-2010/073149
- DE-A1-102007 031 198

## Beschreibung

Die Erfindung betrifft einen Mikrofaser-Verbundvliesstoff. Die Erfindung betrifft ferner die Herstellung eines solchen Verbundvliesstoffs, sowie seine Verwendung.

Vliesstoffe sind für viele Anwendungen vorteilhaft. Vliesstoffe sind Gebilde aus Fasern begrenzter Länge, Endlosfasern (Filamenten) oder geschnittenen Garnen jeglicher Art und jeglichen Ursprungs, die auf irgendeine Weise zu einem Flächengebilde, Vlies, einem Vliesstoff, einer Faserschicht, einem Faserflor zusammengefügt und auf irgendeine Weise miteinander verbunden worden sind; davon ausgeschlossen ist das Verkreuzen bzw. Verschlingen von Garnen, wie es beim Weben, Wirken, Stricken, der Spitzenherstellung, dem Flechten und Herstellen von getufteten Erzeugnissen geschieht. Vliesstoffe können auf die verschiedensten Arten und Weisen, beispielsweise mittels mechanischer, aerodynamischer und/oder hydrodynamischer Verfahren hergestellt werden.

Ein wesentlicher Parameter von Vliesstoffen ist ihre Porengrößenverteilung. Anwendungsspezifisch sind dabei Vliesstoffe mit geeigneter Porengrößenverteilung und geeignetem Luftdurchgangswiderstand beispielsweise als Bestandteil von Schallschutzlagen im Baubereich, von Schallschutzlagen in Kraftfahrzeugen, als Barrierelage in Heimtextilien (milbendichte Produkte, Allergikerbettwäsche, Reinigungsmedien), als Verpackungsmaterial oder Filtermedien einsetzbar.

Bisher wurden für diese Anwendungen in der Regel aus gesplitteten Mikrofasern bestehende Vliesstoffe verwendet. Mikrofaservliesstoffe weisen zwar eine für verschiedene Anwendungen geeignete Porengrößenverteilung kombiniert mit sehr guten Funktionalitäten auf, ihr Herstellungsverfahren ist jedoch besonders zur Erzeugung von Materialien mit gleichmäßiger und homogener Porengrößenverteilung technisch vergleichsweise aufwändig und bedingt oftmals die Verwendung hoher Flächengewichte. Mit zunehmendem Flächengewicht jedoch wird die Erzielung der für die Mikrofasereigenschaften notwendigen hohen Splitgrade zunehmend schwieriger.

Bei der Verwendung alternativer Materialien, wie beispielsweise Folien, Spezialpapieren oder auch Schmelzblasfasern ist dagegen oftmals das Profil der mechanischen Eigenschaften ungenügend.

### Darstellung der Erfindung

Die Erfindung hat sich die Aufgabe gestellt, einen Vliesstoff bereitzustellen, der die vorgenannten Nachteile, zumindest zum Teil ausräumt.

Erfindungsgemäß wird die Aufgabe durch einen Mikrofaser-Verbundvliesstoff gelöst, umfassend mindestens eine Lage S, die eine erste Faserkomponente enthält und mindestens eine Lage M, die eine zweite Faserkomponente enthält, wobei die zweite Faserkomponente zumindest teilweise in die Lage S eingedrungen ist und wobei
- die Fasern der ersten Faserkomponente schmelzgesponnene und zu einem Vlies abgelegte Verbundfilamente sind, die zumindest teilweise zu Elementar-Filamenten mit einem mittleren Titer von weniger als 1 dtex, gesplittet und verfestigt sind,
- die Fasern der zweiten Faserkomponente Schmelzblasfasern sind.

Im Folgenden werden die zumindest teilweise zu Elementar-Filamenten mit einem mittleren Titer von weniger als 1 dtex gesplitteten Verbundfilamente auch kurz als "Splitfasern" bezeichnet.

Der erfindungsgemäße Mikrofaser-Verbundvliesstoff zeichnet sich dadurch aus, dass er Splitfasern in synergistischer Kombination mit Schmelzblasfasern enthält.

Erfindungsgemäß wurde gefunden, dass durch die spezielle Kombination der Splitfasern mit den Schmelzblasfasern ein Vliesstoff mit geringem mittleren Porendurchmesser von vorzugsweise weniger als 20 µm beispielsweise von 7 µm bis 17 µm, noch bevorzugter von 9 µm bis 17 µm erhalten werden kann. Dabei kann der kleinste gefundene Porendurchmesser vorzugsweise weniger als 11 µm, beispielsweise von 5 µm bis 10 µm, noch bevorzugter von 2 µm bis 6 µm betragen.

Ein erfindungsgemäßer Mikrofaser-Verbundvliesstoff mit den vorgenannten geringen Porendurchmessern weist den Vorteil auf, dass er auch bei vergleichsweise geringen Flächengewichten, beispielsweise bei einem Flächengewicht von unter 300 g/m², hohe Fraktionsabscheidegrade aufweist. Dies ermöglicht die vorteilhafte Verwendung z.B. als Filtermedium oder im Bereich Allergiker geeigneter Textilien.

Gleichzeitig werden hervorragende mechanische Eigenschaften, besonders auch bei Belastung im heißen Zustand, gefunden. Darüber hinaus erweist sich die spezielle Kombination der Splitfasern mit den Schmelzblasfasern besonders auch im Sinn der Schallabsorbtion als unerwartet günstig. In einem erfindungsgemäßen Mikrofaser-Verbundvliesstoff zeigt sich bei Betrachtung der Schallabsorbtion ein überraschender synergistischer Effekt von Splitfasern und Schmelzblasfasern. Dabei liegt der Schallabsorbtionskoeffizient deutlich über dem Bereich, den man durch reine Kombination der Ausgangsmaterialien oder Bewertung des zu messenden Luftdurchgangswiderstandes erwarten würde. Dieses Ergebnis war insofern besonders überraschend, als eigentlich zu erwarten war, dass der durch Schmelzblasfasern üblicherweise erzeugte, starke Barriereeffekt zu überproportional hohem Luftdurchgangswiderstand führt, was sich zur Erzeugung eines ausgewogenen Schallabsorptionsprofiles als unvorteilhaft erweisen sollte.

Ohne sich auf einen Mechanismus festzulegen wird vermutet, dass die gute Performance des erfindungsgemäßen Vliesstoffs zur Schallabsorption und als Filtermedium durch das zumindest teilweise Eindringen der Faserkomponente der Lage M in die Lage S erzielt wird. Erfindungsgemäß dringen die Schmelzblasfasern in die Splitfasern aufweisende Lage S zumindest teilweise ein. Dabei kann auch eine weitergehende Durchmischung der Lagen dahingehend vorliegen, dass beide Faserkomponenten in die jeweils andere Lage zumindest teilweise eingedrungen und/oder eine vollständige Vermischung der Faserkomponenten der Lagen S und M vorliegt. Dieser Effekt kann beispielsweise dadurch erzielt werden, dass zunächst ein Lagenverbund S'M' oder auch größere Lagenverbunde gebildet (z.B. S'M'C) und anschließend ein Wasserstrahlverfestigungsschritt für den gesamten Lagenverbund durchgeführt wird, bei dem neben der Vermischung zweckmäßigerweise gleichzeitig eine Splittung bzw. Verfestigung stattfindet. Dabei hat sich gezeigt, dass mittels Wasserstrahlverfestigung beide Lagen in einem Schritt miteinander verbunden werden können und dass keine weiteren Split- bzw. nachfolgende Verfestigungsschritte erforderlich sind. Mithin können in der Wasserstrahlverfestigung die zur Herstellung der Lage S eingesetzten Verbundfilamente gesplittet und gleichzeitig die Schmelzblasfasern in Z-Richtung, d.h. in Richtung des Querschnitts des Vliesstoffs, verteilt werden. Ebenso können auch die in der Lage S eingesetzten gesplitteten Verbundfilamente in Z-Richtung, d.h. in Richtung des Querschnitts des Vliesstoffs, verteilt werden. In Abhängigkeit von verschiedenen Parametern, wie beispielsweise des bei der Wasserstrahlverfestigung eingesetzten Drucks, der Lagendicke und der Klebrigkeit der Schmelzblasfasern kann dies zu einer mehr oder weniger gleichmäßigen Verteilung der Schmelzblasfasern in der Lage S bis hin zu einer völligen Vermischung der beiden Lagen führen. Diese Variabilität kann genutzt werden, um Eigenschaftsprofile des Verbundmaterials gezielt zu modifizieren.

Dabei können z.B. üblicherweise negativ bewertete Eigenschaften von Einzellagen des Komposits kompensiert werden. So ist zum Beispiel nach gemeinsamer Wasserstrahlverfestigung von Schmelzblasfasern und Verbundfilamenten parameterabhängig eine deutlich höhere Abriebbeständigkeit der Oberfläche zu beobachten, als es für eine rein aus Schmelzblasfasern bestehende Oberfläche zu erwarten wäre.

Erfindungsgemäß weist die erste Faserkomponente schmelzgesponnene und zu einem Vlies abgelegte Verbundfilamente auf. Unter dem Begriff Filamente werden erfindungsgemäß Fasern verstanden, die im Unterschied zu Stapelfasern eine theoretisch unbegrenzte Länge haben. Verbundfilamente bestehen aus mindestens zwei Elementar-Filamenten und können durch gebräuchliche Splittverfahren, wie beispielsweise Wasserstrahlvernadeln, in Elementarfilamente gespalten und verfestigt werden. Die Verbundfilamente der ersten Faserkomponente sind erfindungsgemäß zumindest zum Teil in Elementarfilamente gespalten.

Ebenfalls bevorzugt beträgt der Titer der Verbundfilamente vor dem Splitten 1,5 bis 3,5 dtex, noch bevorzugter von 2,0 dtex bis 3,0 dtex und/oder der Titer der Elementar-Filamente von 0,01 dtex bis 0,8 dtex, vorzugsweise von 0,03 dtex bis 0,6 dtex und insbesondere von 0,05 dtex bis 0,5 dtex.

Vorzugsweise weisen die Verbundfilamente mindestens zwei inkompatible Polymere auf. Solche Verbundfilamente zeigen eine gute Spaltbarkeit in Elementarfilamente und bewirken ein günstiges Verhältnis von Festigkeit zu Flächengewicht.

Um eine geeignete Porengrößenverteilung bei genügender mechanischer Festigkeit zu erzielen ist es von Vorteil, wenn der Anteil der Elementarfilamente der ersten Faserkomponente, bezogen auf das Gesamtgewicht des Vliesstoffs (als Summenwert über alle Verbundlagen hinweg) mindestens 20 Gew.% beträgt. Praktische Versuche haben ergeben, dass ein besonders ausgewogenes Eigenschaftsprofil zwischen Porositäts- und mechanischen Eigenschaften erzeugt werden kann, wenn der Anteil dieser Elementarfilamente von 20 Gew.% bis 60 Gew.%, insbesondere von 30 Gew.% bis 50 Gew.%, bezogen auf das Gesamtgewicht des Verbundvliesstoffs beträgt.

In Bezug auf die einzelnen Lagen des Vliesstoffs ist es von Vorteil, wenn der Anteil der Elementarfilamente der ersten Faserkomponente in der jeweiligen Lage S, beispielsweise in einer äußeren Lage S oder in einer innen liegenden Lage S von 80 Gew.% bis 100 Gew.%, vorzugsweise von 90 Gew.% bis 100 Gew.%, insbesondere 100 Gew.%, jeweils bezogen auf das Gesamtgewicht der Lage S, beträgt.

Im Hinblick auf Abriebbeständigkeit bzw. Pilling der Oberfläche ist es dabei von Vorteil, wenn mindestens eine äußere Lage des Vliesstoffs von den Lagen S gebildet wird.

Vorteilhaft an der Verwendung von Verbundfilamenten als Ausgangsmaterial zur Herstellung der Elementarfilamente ist, dass der Titer der aus ihnen erzeugten Elementarfilamente auf einfache Weise durch Variation der Anzahl der in den Verbundfilamenten enthaltenen Elementarfilamente eingestellt werden kann. Hierbei kann der Titer der Verbundfilamente konstant bleiben, was prozesstechnisch von Vorteil ist. Weiter vorteilhaft an der Verwendung der Verbundfilamente ist, dass zusätzlich durch Variation des Splittgrads der Verbundfilamente auf einfache Weise das Verhältnis an dickeren und dünneren Filamenten im Vliesstoff gesteuert werden kann.

Die Elementarfilamente können dabei im Querschnitt kreissegmentförmig, n-eckig, oder multilobal ausgebildet sein.

Vorzugsweise ist der erfindungsgemäße Mikrofaser-Verbundvliesstoff einer, bei dem die Verbundfilamente einen Querschnitt mit Orangenspalten-artiger oder auch "Pie" genannter Multisegment-Struktur aufweisen, wobei die Segmente verschiedene, alternierende, inkompatible Polymere, enthalten können. Ebenfalls geeignet sind Hollow-Pie Strukturen, die auch einen asymmetrisch axial verlaufenden Hohlraum aufweisen können. Pie-Strukturen, insbesondere Hollow-Pie Strukturen, können besonders leicht gesplitteten werden.

Im Hinblick auf die erste Faserkomponente weist die Orangenspalten- bzw. Kuchenstück-Anordnung (Pie-Anordnung) vorteilhafterweise 2, 4, 8, 16, 24, 32 oder 64 Segmente, besonders bevorzugt 16, 24 oder 32 Segmente, auf.

Um eine leichte Splittbarkeit zu erhalten ist es vorteilhaft, wenn die Verbundfilamente Filamente umfassen, die mindestens zwei thermoplastische Polymere enthalten. Vorzugsweise umfassen die Verbundfilamente mindestens zwei inkompatible Polymere. Unter inkompatiblen Polymeren sind solche Polymere zu verstehen, die in Kombination nicht, nur bedingt bzw. schwer klebende Paarungen ergeben. Ein solches Verbundfilament weist eine gute Spaltbarkeit in Elementarfilamente auf und bewirkt ein günstiges Verhältnis von Festigkeit zu Flächengewicht.

Als inkompatible Polymerpaare, werden vorzugsweise Polyolefine, Polyester, Polyamide und/oder Polyurethane in einer solchen Kombination eingesetzt, dass sich nicht, nur bedingt bzw. schwer klebende Paarungen ergeben.

Die verwendeten Polymerpaare werden besonders bevorzugt ausgewählt aus Polymerpaaren mit mindestens einem Polyolefin und/oder mindestens einem Polyamid, bevorzugt mit Polyethylen, wie Polypropylen/ Polyethylen, Polyamid6/ Polyethylen oder Polyethylenterepthalat/ Polyethylen, oder mit Polypropylen, wie Polypropylen/ Polyethylen, Polyamid 6/ Polypropylen oder Polyethylenterepthalat/ Polypropylen.

Ganz besonders bevorzugt werden Polymerpaare mit mindestens einem Polyester und/oder mindestens einem Polyamid.

Polymerpaare mit zumindest einem Polyamid oder mit zumindest einem Polyethylenterephthalat werden wegen deren bedingter Klebbarkeit bevorzugt und Polymerpaare mit zumindest einem Polyolefin werden wegen deren schwerer Klebbarkeit besonders bevorzugt verwendet.

Als besonders bevorzugte Komponenten haben sich Polyester, vorzugsweise Polyethylenterephthalat, Polymilchsäure und/oder Polybutylenterephthalat einerseits, Polyamid, vorzugsweise Polyamid 6, Polyamid 66, Polyamid 46, andererseits ggf. in Kombination mit einem oder mehreren weiteren zu den oben genannten Komponenten inkompatiblen Polymeren, vorzugsweise ausgewählt aus Polyolefinen als besonders zweckmäßig erwiesen. Diese Kombination weist eine hervorragende Spaltbarkeit auf. Ganz besonders bevorzugt ist die Kombination aus Polyethylenterephthalat und Polyamid 6 oder aus Polyethylenterephthalat und Polyamid 66.

Zur Ausgestaltung eines erfindungsgemäßen Mikrofaser-Verbundvliesstoffs ist es dabei günstig, wenn zumindest eine der in den Verbundfilamenten der Lage S verwendete Komponenten auch als Rohstoff zur Herstellung der Schmelzblasfasern der Lage M verwendet wird.

Um einen Verbundvliesstoff mit hoher Festigkeit zu erhalten, können die Verbundfilamente der Lage S auch eine latente oder spontane Kräuselung aufweisen, welche sich aus einem asymmetrischen Aufbau der Elementarfilamente in Bezug auf deren Längsmittelachse ergibt, wobei diese Kräuselung gegebenenfalls durch eine asymmetrische, geometrische Ausgestaltung des Querschnitts der Verbundfilamente aktiviert oder verstärkt wird. Hierdurch kann der Vliesstoff mit einer hohen Dicke, einem niedrigen Modul und/oder einer multiaxialen Elastizität ausgestattet werden.

In einer Variante können die Verbundfilamente der Lage S eine latente oder spontane Kräuselung aufweisen, welche auf eine Differenzierung der physikalischen Eigenschaften der die Elementarfilamente bildenden Polymerstoffe bei den die Verbundfilamente betreffenden Spinn-, Kühlungs- und/oder Streckungsvorgängen zurückzuführen ist, die zu Verdrehungen führt, welche durch interne unsymmetrische Belastungen in Bezug auf die Längsmittelachse der Verbundfilamente verursacht werden, wobei die Kräuselung gegebenenfalls durch eine asymmetrische, geometrische Ausgestaltung des Querschnitts der Verbundfilamente aktiviert oder verstärkt wird.

Die Verbundfilamente können eine latente Kräuselung aufweisen, welche durch eine thermische, mechanische oder chemische Behandlung vor Bildung des Verbundvliesstoffs aktiviert wird.

Gemäß einer bevorzugten Ausführungsform der Erfindung sind die Verbundfilamente durch Spinnfärben eingefärbt.

Erfindungsgemäß weist die zweite Faserkomponente Schmelzblasfasern auf. Unter dem Begriff Schmelzblasfasern werden erfindungsgemäß Fasern verstanden, die durch Extrudieren eines geschmolzenen thermoplastischen Materials durch eine Vielzahl von feinen, gewöhnlich kreisförmig ausgebildeten Düsenkapillaren als geschmolzene Fasern in ein Hochgeschwindigkeitsgas (beispielsweise Luft), hergestellt werden. Durch diese Vorgehensweise wird der Durchmesser der Fasern verringert. Danach werden die schmelzgeblasenen Fasern durch den Hochgeschwindigkeitsgasstrom getragen und auf einer Sammeloberfläche abgelegt, um ein Vlies aus zufällig verteilten Fasern zu bilden. Das Schmelzblasverfahren ist gut bekannt und in verschiedenen Patenten und Publikationen, beispielsweise NRL -Bericht 4364, " Herstellung von superfeinen organischen Fasern " von V. A. Wendt, E.L. Boone und C. D. Fluharty ; NRL -Bericht 5265, " eine verbesserte Vorrichtung für die Bildung von superfeinen Thermoplastic Fibers " von K. D. Lawrence, R. T. Lukas , und J.A. Junge ; und U.S. Patent No. 3,849,241 , erteilt am 19. November 1974 an Buntin , et al, beschrieben. Diese Druckschriften sind hiermit durch Bezugnahme als Referenz aufgenommen.

In einer weiteren bevorzugten Ausführungsform der Erfindung sind die Schmelzblasfasern aus Polymeren gebildet, ausgewählt aus der Gruppe bestehend aus: Polyester, Polyolefinen, Polyamiden sowie Polyurethanen, Copolymeren und/oder Gemischen hiervon.

In besonders bevorzugter Ausgestaltung der Erfindung wird als Rohstoff der Schmelzblasfasern ein thermoplastischer, spinnbarer oder spritzgussverarbeitbarer Rohstoff eingesetzt, insbesondere ausgewählt aus Polyolefinen, Copolyolefinen, Polyestern, Copolyestern, Polyurethanen, 1 Polyamiden und/oder Copolyamiden mit einem MFI-Wert (Melt-Flow-Index, Schmelzflussindex) ISO 1133 von 100 bis 3000 g/ 10 min.

Durch die niedrige Viskosität des Rohstoffs der zur Herstellung von Schmelzblasfasern verwendet wird, können bei entsprechenden Verarbeitungsbedingungen Filamente mit sehr niedrigen Titern hergestellt werden. Dadurch wird die Vermischung der Lagen beim Splitvorgang begünstigt, wodurch eine unerwünschte Delaminierung zwischen den Lagen verhindert werden kann und damit Verbunde mit hoher mechanischer Belastbarkeit entstehen.

In einer weiteren bevorzugten Ausführungsform der Erfindung weisen die Schmelzblasfasern einen Fasertiter von 0,5 µm bis 5 µm, vorzugsweise von 1,0 µm bis 4 µm, insbesondere von 1,8 µm bis 3,6 µm auf. Vorteilhaft an dieser Ausführungsform ist, dass ein hinsichtlich der Porengrößenverteilung besonders homogenes Vliesstoffkomposit erzeugt werden kann, da Fehlstellen der Lage S mit Schmelzblasfasern kompatibler Ausgestaltung ausgefüllt werden können. Dies führt bei Verwendung des Mikrofaser-Verbundvliesstoffs als Filtermaterial zu besonders guten Fraktionsabscheidegraden von Partikeln im Bereich von 0,5 µm bis 10 µm.

Der Anteil der Schmelzblasfasern im Mikrofaser-Verbundvliesstoff beträgt vorzugsweise mindestens 20 Gew.%, noch bevorzugter von 40 Gew.% bis 60 Gew.%, insbesondere von 45 Gew.% bis 55 Gew.%, jeweils bezogen auf das Gesamtgewicht des Mikrofaser-Verbundvliesstoffs.

Denkbar ist, dass die mindestens eine Lage S und/oder M neben der jeweiligen Faserkomponente (Splitfasern und/oder Schmelzblasfasern) noch weitere Komponenten, beispielsweise weitere Fasern, aufweist. Ebenfalls denkbar ist, dass der Mikrofaser-Verbundvliesstoff aus mehr als zwei Lagen, beispielsweise unter zusätzlicher Verwendung von weiteren Lage S und/oder M, Stapelfaservliesen und/oder anderen nichttextilen Flächengebilden aufgebaut ist. So kann der Mikrofaser-Verbundvliesstoff erfindungsgemäß neben den Lagen S und M mindestens eine weitere Lage C aufweisen, die zum Beispiel Stapelfasern und/oder Endlosfasern (Filamente), enthaltend vorzugsweise synthetische Fasern wie zum Beispiel Aramidfasern und/oder Naturfasern, enthält oder noch bevorzugter aus ihnen besteht. In einer bevorzugten Ausführungsform der Erfindung durchdringen sich die Fasern und/oder Filamente der Lagen S, M und/oder C gegenseitig zumindest teilweise.

Vorteilhafterweise bildet die mindestens eine weitere Lage C eine und/oder beide Aussenlagen des Mikrofaser-Verbundvliesstoffs.

Durch die Integration weiterer Lagen C können abhängig von Größe, Art und in der Faserkomponente verwendetem Rohstoff weitere Funktionalitäten erzeugt werden, die z.B. einen progressiven Aufbau oder flammhemmende Oberflächen ermöglichen.

Denkbar ist auch, dass die mindestens eine weitere Lage C als Verstärkungslage, beispielsweise in Form eines Scrims ausgebildet ist und/oder dass sie Gewebe, Gewirke und/oder Gelege umfasst. Dabei ist grundsätzlich denkbar, dass die mindestens eine weitere Lage C die Außenlage(n) des Vliesstoffs bildet. Vorteilhafterweise ist die mindestens eine weitere Lage C jedoch so angeordnet, dass im Querschnitt des Mikrofaser-Verbundvliesstoffs ein progressiver Aufbau in Bezug auf die Faserfeinheit entsteht. Hierdurch können die verschiedenen Faserquerschnitte /-stärken graduell ineinander übergehen.

Die zur Herstellung der Filamente des Verbundvliesstoffs eingesetzten Polymere können zumindest ein Additiv, ausgewählt aus der Gruppe bestehend aus Farbpigmenten, Antistatika, Antimikrobia wie Kupfer, Silber, Gold, oder Hydrophilierungs- oder Hydrophobierungs-Additive in einer Menge von 150 ppm bis 10 Gew.%, enthalten. Die Verwendung der genannten Additive in den eingesetzten Polymeren gestattet die Anpassung an kundenspezifische Anforderungen.

Die Flächengewichte des erfindungsgemäßen Verbundvliesstoffs werden in Abhängigkeit von dem gewünschten Anwendungszweck eingestellt. Als für viele Anwendungen zweckmäßig haben sich Flächengewichte, gemessen nach DIN EN 29073, im Bereich von 40 g/m² bis 300 g/m², vorzugsweise von 50 g/m² bis 150 g/m², und insbesondere von 70 g/m² bis 130 g/m² erwiesen. Dabei beträgt vorteilhafter Weise das Flächengewicht der Lage S von 30 g/m² bis 250 g/m², vorzugsweise von 40 g/m² bis 100 g/m², und/oder das Flächengewicht der Lage M von 10 g/m² bis 100 g/m², vorzugsweise von 20 g/m² bis 60 g/m².

Weiter vorzugsweise weist der Verbundvliesstoff eine Dicke nach DIN EN ISO 9073-2 von 0,1 mm bis 3,0 mm, vorzugsweise von 0,15 mm bis 2,5 mm, insbesondere von 0,2 mm bis 2 mm auf.

Weiter vorzugsweise weist der Verbundvliesstoff einen Schallabsorbtionsgrad (1000 Hz) von mehr als 0,4, beispielsweise von 0,4 bis 0,8 und/oder von mehr als 0,5, beispielsweise von 0,5 bis 0,7 und/oder von mehr als 0,6, beispielsweise von 0,6 bis 0,7 auf, jeweils vorzugsweise bei einem Flächengewicht unter 150 g/m², noch bevorzugter unter 130 g/m², insbesondere unter 100 g/m².

Ebenfalls bevorzugt weist der Verbundvliesstoff einen Schallabsorbtionsgrad (2000 Hz) von mehr als 0,8, beispielsweise von 0,8 bis 1,0 und/oder von mehr als 0,85, beispielsweise von 0,85 bis 1,0 und/oder von mehr als 0,9, beispielsweise von 0,9 bis 1,0 auf, jeweils vorzugsweise bei einem Flächengewicht unter 150 g/m², noch bevorzugter unter 130 g/m², insbesondere unter 100 g/m².

Ebenfalls bevorzugt weist der Verbundvliesstoff einen Schallabsorbtionsgrad (3000 Hz) von mehr als 0,8, beispielsweise von 0,8 bis 1,0 und/oder von mehr als 0,85, beispielsweise von 0,85 bis 1,0 und/oder von mehr als 0,9, beispielsweise von 0,9 bis 1,0 auf, jeweils vorzugsweise bei einem Flächengewicht unter 150 g/m², noch bevorzugter unter 130 g/m², insbesondere unter 100 g/m².

Ebenfalls bevorzugt weist der Verbundvliesstoff einen mean flow pore diameter von weniger als 20 µm, beispielsweise von 5 µm bis 20 µm, noch bevorzugter von weniger als 18 µm, beispielsweise von 6 µm bis 18 µm, und insbesondere von weniger als 17 µm, beispielsweise von 7 µm bis 17 µm auf, jeweils vorzugsweise bei einem Flächengewicht unter 200 g/m², noch bevorzugter unter 150 g/m², insbesondere unter 100 g/m².

Ebenfalls bevorzugt weist der Verbundvliesstoff einen Fraktionsabscheidegrad (Partikelgröße 1-4,7 mm) von mehr als 60%, beispielsweise von 60% bis 100%, noch bevorzugter von mehr als 75%, beispielsweise von 75% bis 100% und insbesondere von mehr als 90%, beispielsweise von 90% bis 100% auf.

Ebenfalls bevorzugt weist der Verbundvliesstoff einen Fraktionsabscheidegrad (Partikelgröße >5 mm) von mehr als 80%, beispielsweise von 80% bis 100%, noch bevorzugter von mehr als 85%, beispielsweise von 85% bis 100%, und insbesondere von mehr als 90%, beispielsweise von 90% bis 100% auf.

Ebenfalls bevorzugt weist der Verbundvliesstoff eine Heisszugdehnung in Längsrichtung (180°C) von mehr als 50%, beispielsweise von 50% bis 85% und/oder von 50% bis 80%, noch bevorzugter von mehr als 60%, beispielsweise von 60% bis 85% und/oder von 60% bis 80% und insbesondere von mehr als 65%, beispielsweise von 65% bis 85% und/oder von 65% bis 80% auf.

Ebenfalls bevorzugt weist der Verbundvliesstoff eine Heisszugdehnung in Querrichtung (180°C) von mehr als 55%, beispielsweise von 55% bis 95% und/oder von 50% bis 90%, noch bevorzugter von mehr als 65%, beispielsweise von 65% bis 95% und/oder von 65% bis 90% und insbesondere von mehr als 75%, beispielsweise von 75% bis 95% und/oder von 75% bis 90% auf.

Ebenfalls bevorzugt weist der Verbundvliesstoff eine dreidimensionale Verformbarkeit in heißem Zustand (OTI Test, 160°C) auf, bestimmt als Weglänge bis zur Beschädigung in cm, von mindestens 8 cm, beispielsweise 8 cm bis 12 cm, vorzugsweise von mindestens 9 cm, beispielsweise 9 cm bis 12 cm, noch bevorzugter von mindestens 10 cm, beispielsweise 10 cm bis 12 cm.

Aufgrund seiner spezifischen Eigenschaften eignet sich der erfindungsgemäße Mikrofaser-Verbundvliesstoff hervorragend als Schallschutzlage und/oder als Bestandteil von Schallschutzlagen, beispielsweise im Baubereich und/oder in Kraftfahrzeugen. Ebenfalls geeignet ist er als Barrierelage in Heimtextilien (milbendichte Produkte, Allergikerbettwäsche, Reinigungsmedien), als Verpackungsmaterial oder Filtermedium.

Im nachfolgend beschriebenen Verfahren beziehen sich die Begriffskennungen S' und M' auf diejenigen Lagen, die nach Hydrofluidbehandlung zu den korrespondierenden Lagen S und M des erfindungsgemäßen Mikrofaser-Verbundvliesstoff werden.

Die Erfindung umfasst ferner ein Verfahren zur Herstellung des erfindungsgemäßen Mikrofaser-Verbundvliesstoffs umfassend die folgenden Schritte:
- Herstellen und/oder Bereitstellen mindestens einer ersten Lage S', die schmelzgesponnene und zu einem Vlies abgelegte Verbundfilamente enthält und/oder eines die Lage S' als Oberflächenlage umfassendes Vlieskomposits;
- Aufbringen mindestens einer zweiten Lage M', die Schmelzblasfasern enthält, auf die Lage S' und/oder auf diejenige Seite des Vlieskomposits, das die Lage S' als Oberflächenlage aufweist unter Ausbildung eines die Lagen S' und M' aufweisenden Vlieskomposits; und/oder
- Aufbringen mindestens eines die Lage M' als Oberflächenlage umfassenden Vlieskomposits, auf die Lage S', und/oder auf diejenige Seite des Vlieskomposits, das die Lage S' als Oberflächenlage aufweist, jeweils derart, dass M' und S' benachbarte Lagen bilden unter Ausbildung eines die Lagen S' und M' aufweisenden Vlieskomposits;
- Hydrofluidbehandlung des die Lagen S' und M' aufweisenden Vlieskomposits, wodurch die Verbundfilamente der ersten Lage S' zumindest teilweise zu Elementar-Filamenten mit einem mittleren Titer von weniger als 1 dtex, gesplittet und gleichzeitig verfestigt und mit den Schmelzblasfasern der zweiten Lage M' zu einem Lagenverbund verbunden werden und wobei die Schmelzblasfasern der Lage M' zumindest teilweise in die Lage S' eindringen.

Zur Herstellung der ersten Lage S' können die Verbundfilamente beispielsweise durch mechanische und/oder pneumatische Ablenkung abgelegt werden, wobei mindestens zwei von diesen Ablenkungsarten kombiniert werden können, sowie durch Schleudern auf ein Endlos-Laufband. Gemäß einer bevorzugten Ausführungsform der Erfindung werden die Verbundfilamente durch Spinnfärben eingefärbt.

Die Lage S' kann, beispielsweise durch mechanische Verfestigung, wie insbesondere Vernadeln und/oder Thermofusion, wie insbesondere Kalandrieren, vorverfestigt werden. In dieser Variante kann eine Vorverfestigung der ersten Lage vor der gezielten Trennung der einheitlichen Verbundfilamente in Elementarfilamente erfolgen.

Anstelle der ersten Lage S' kann auch ein Vlieskomposit eingesetzt werden, welches mindestens eine weitere Lage und die Lage S' als Oberflächenlage umfasst. Dabei ist die mindestens eine weitere Lage des Vlieskomposits vorteilhafter Weise die in Bezug auf den erfindungsgemäßen Verbundvliesstoff beschriebene weitere Lage C. Die Verbindung zwischen der ersten Lage S' und der mindestens eine weitere Lage kann auf herkömmliche Weise, beispielsweise mittels Nähen, Fügen, Kleben erfolgen.

Im nächsten Schritt wird eine Lage M', die Schmelzblasfasern enthält, auf die Lage S' und/oder auf diejenige Seite des Vlieskomposits, das die Lage S' als Oberflächenlage aufweist, unter Ausbildung eines die Lagen S' und M' aufweisenden Vlieskomposits aufgebracht.

Alternativ kann auch ein die Lage M' als Oberflächenlage umfassendes Vlieskomposit auf die Lage S' und/oder auf diejenige Seite eines Vlieskomposits, das mindestens eine weitere Lage sowie die Lage S' als Oberflächenlage aufweist, aufgebracht werden. Dabei ist die mindestens eine weitere Lage des Vlieskomposits vorteilhafter Weise die in Bezug auf den erfindungsgemäßen Verbundvliesstoff beschriebene weitere Lage C. Das Aufbringen erfolgt dabei jeweils derart, dass M' und S' benachbarte Lagen bilden unter Ausbildung eines die Lagen S' und M' aufweisenden Vlieskomposits.

Dabei ist unter dem Schritt des Aufbringens von Lagen erfindungsgemäß zu verstehen, dass diese in vorgefertigter Form aufeinander angeordnet werden und/oder dass mindestens eine Lage direkt auf einer anderen, beispielsweise durch Schmelzspinnen, erzeugt wird. Vorzugsweise weist die Lage M' eine Dicke nach DIN EN ISO 9073-2 von 0,1 mm bis 0,4 mm, vorzugsweise von 0,15 mm bis 0,30 mm auf.

Die Schmelzblasfasern enthaltende Lage M' kann auf herkömmliche Weise, beispielsweise durch Extrudieren eines geschmolzenen thermoplastischen Materials durch eine Vielzahl von feinen, vorzugsweise kreisförmig ausgebildeten Düsenkapillaren als geschmolzene Fasern in einem Hochgeschwindigkeitsgas (vorzugsweise Luft), hergestellt werden. Durch diese Vorgehensweise kann der Durchmesser der Fasern verringert werden. Danach können die schmelzgeblasenen Fasern durch den Hochgeschwindigkeitsgasstrom getragen und auf der ersten Lage S' abgelegt werden, um den Lagenverbund zu bilden.

Ebenfalls denkbar ist das separate Einbringen der mindestens einen weiteren Lage C in den Mikrofaser-Verbundvliesstoff. Hierzu wird die mindestens eine Lage C in vorteilhafter Weise vor der Hydrofluidbehandlung derart auf die Lagen S', M' und/oder auf ein die Lagen S' und M' aufweisendes Vlieskomposit aufgebracht, dass die mindestens eine Lage C eine und/oder beide Aussenlagen des gebildeten Vlieskomposits darstellt.

Das die Lagen S' und M' aufweisende Vlieskomposit wird anschließend einer Hydrofluidbehandlung unterzogen, bei der die Verbundfilamente zumindest teilweise zu Elementar-Filamenten mit einem mittleren Titer von weniger als 1 dtex gesplittet und gleichzeitig verfestigt und mit den Schmelzblasfasern verbunden werden, wobei die Faserkomponenten der Lage M' zumindest teilweise in die Lage S' eindringen.

Die Hydrofluidbehandlung des Lagenverbunds erfolgt vorteilhafterweise dadurch, dass der gegebenenfalls vorverfestigte Lagenverbund mindestens einmal auf jeder Seite mit Hochdruck-Fluidstrahlen, vorzugsweise mit Hochdruck-Wasserstrahlen, beaufschlagt wird. Hierdurch kann ein erfindungsgemäßer Verbundvliesstoff mit geeigneten Porositätseigenschaften und Gleichmäßigkeit erhalten und der Splittungsgrad der Verbundfilamente gezielt eingestellt werden.

Als besonders günstig haben sich bei diesem Schritt Wasserstrahldrücke von 150 bar bis 250 bar, vorzugsweise von 200 bar bis 220 bar erwiesen.

Wie oben erläutert können die Verbundfilamente, um die Trennung in die Elementarfilamente zu erleichtern, eine mittige Öffnung, insbesondere in Form eines rohrförmigen länglichen Hohlraums aufweisen, welcher in Bezug auf die Mittelachse der Verbundfilamente zentriert sein kann. Durch diese Anordnung lassen sich der enge Kontakt zwischen den Elementarfilamenten, welche durch die Innenwinkel der Spalten bzw. Kreisausschnitte gebildet werden, vor Trennung der Elementarfilamente, sowie der Kontakt in diesem Bereich von verschiedenen aus demselben Polymerstoff hergestellten Elementarfilamenten, verringern bzw. vermeiden.

Die Festigkeit und der mechanische Widerstand des Verbundvliesstoffs können zusätzlich deutlich erhöht werden, wenn vorgesehen ist, dass die Elementarfilamente untereinander durch eine Thermofusion gebunden werden.

Diese Thermofusion kann mit dem Lagenverbund nach der Hydrofluidbehandlung durchgeführt werden.

In einer bevorzugten Ausführung zur Herstellung des erfindungsgemäßen Mikrofaser-Verbundvliesstoffs wird die Lage S' und/oder ein die Lage S' als Oberflächenlage umfassendes Vlieskomposit bereits vor der Hydrofluidbehandlung durch Thermofusion verfestigt.

Durch Vorfixierung der Verbundfilamente kann dadurch der bei der Hydrofluidbehandlung zu verwendende Druck reduziert werden.

Dabei kann die Thermofusion auf übliche Weise, beispielsweise durch Warmkalandrierung mit geheizten, glatten oder gravierten Walzen (Kalandrieren), durch Durchziehen durch einen Heißluft-Tunnelofen und/oder durch Durchziehen auf eine von heißer Luft durchströmte Trommel erfolgen.

Alternativ oder zusätzlich zur Thermofusion kann eine Bindung des Verbundvliesstoffs und/oder der Lage S' separat durch Auftragen eines in einer Dispersion oder in einer Lösung enthaltenen oder pulverförmigen Bindemittels erfolgen.

Ferner kann der Lagenverbund auch durch eine chemische Behandlung (wie sie beispielsweise in der französischen Patentschrift Nr. 2 546 536 der Anmelderin beschrieben ist) und/oder durch eine thermische Behandlung verfestigt werden, welche zu einer kontrollierten Schrumpfung, zumindest eines Teils der Elementarfilamente, nach deren gegebenenfalls erfolgter Trennung führt. Daraus ergibt sich eine Schrumpfung des Stoffs in Breit- und/oder in Längsrichtung.

Des Weiteren kann der Lagenverbund nach der Hydrofluidbehandlung einer Bindung oder Veredelung chemischer Art unterzogen werden, wie beispielsweise einer Anti-Pilling-Behandlung, einer Hydrophilierung oder Hydrophobierung, einer antistatischen Behandlung, einer Behandlung zur Verbesserung der Feuerfestigkeit und/oder zur Veränderung der taktilen Eigenschaften oder des Glanzes, einer Behandlung mechanischer Art wie Aufrauen, Sanforisieren, Schmirgeln oder einer Behandlung im Tumbler und/oder einer Behandlung zur Veränderung des Aussehens wie Färben oder Bedrucken.

Vorteilhafterweise wird der Lagenverbund zur Erhöhung seiner Abriebbeständigkeit nach der Hydrofluidbehandlung noch einer Kalandrierung unterzogen. Dazu wird der gesplittete und verfestigte Verbundvliesstoff durch beheizte Walzen geführt, von denen mindestens eine Walze auch Erhebungen aufweisen kann, die zu einem punktuellen Verschmelzen der Filamente untereinander führen.

Zu Bestimmung der in dieser Erfindung ermittelten Parameter wurden folgende Messmethoden eingesetzt:
I. Flächengewicht (g/m²): EN 29073
II. Dicke (mm): DIN EN ISO 9073-2, Gewicht 12,5 cN/cm, Fläche 10 cm²
III. Luftdurchgang LD (l/m²sec): DIN EN ISO 9237, Schallkennimpedanz afr berechnet aus LD gemäß (Vordruck [mbar]*1000/LD) in rayls
IV. Zugfestigkeit und -dehnung: EN 29073 T3
V. Heisszugfestigkeit und -dehnung: EN 29073 T3, T = 180°C
VI. ÖTI Test:
   Um die Verformungseigenschaften unter Hitze (Tiefziehfähigkeit) zu bewerten, werden fixierte Prüflinge der Substrate in einem einfachen Versuchsaufbau (ÖTI Test) mittels eines auf 160°C aufgeheizten runden Stempels verformt (Kugeldurchmesser 9 cm, absolute Prüflingsgröße 24 cm Durchmesser, frei verformbare Prüflingsgröße 20 cm). Dabei werden die Weglänge bis zur Beschädigung in cm, die bei einer Verformung von 5% und 9% auftretende Kraft in N, sowie die zur Verformung maximal aufzuwendende Kraft in N als Messgrößen zur Bewertung der Materialeigenschaften herangezogen. Eine große Weglänge bei 160°C bei entsprechender (niedriger) Kraft bedeutet demnach positive Verformungseigenschaften unter Hitzeeinwirkung (Tiefziehfähigkeit).
VII. Mean flow pore diameter (µm): ASTM E 1294 (1989), Probengröße 21 mm, Testflüssigkeit Galden HT230, Messung bei Raumtemperatur
VIII. Fraktionsabscheidegrad: EN 1822-3 (2011), Prüfstaub nach ISO 12103-1 A2
   Temperatur 23 °C ± 3°C, rel. Feuchte 50 % ± 5%;
   Anströmgeschwindigkeiten 5 cm/sec und 50 cm/sec; Probenzustand ungewaschen
IX. Schallabsorbtionsgrad: DIN EN ISO 10534-1: 2001-10; Luftraum 30 mm

MD = Maschinenrichtung
CD = Querrichtung
SB = spunbond
MF = Mikrofaser

Im Folgenden wird die Erfindung anhand mehrerer Beispiele näher erläutert.

### Beispiel 1: Herstellung erfindungsgemäßer Mikrofaser-Verbundvliesstoffe

Es werden 7 erfindungsgemäße Mikrofaser-Verbundvliesstoffe, wie in nachfolgender Tabelle beschrieben, hergestellt.

**Tabelle 1: Mikrofaser-Verbundvliesstoffe 1-7 (S' = Lage Verbundfilamente; M' = Lage schmelzgeblasene Filamente; C = Lage kardierte Stapelfasern; CK = Lage kardierte, thermisch gebundene Stapelfasern); x = Zahl der verwendeten Lagen.**

| Einzellage | | | | | | | | |
|---|---|---|---|---|---|---|---|---|
| Gewicht | [g/m²] | 40 | 60 | 100 | 28 | 80 | 80 | |
| Polymer | | PET/PA | PET/PA | PET/PA | PBT | Aramid | Aramid | MF Verbund |
| Faser | | 16 PIE SB | 16 PIE SB | 16 PIE SB | meltblown | card | card / Kal. | Typ |
| Lage MF Verbund | | S' | S' | S' | M' | C | CK | |
| *1* | | x | | | x | | | SM |
| *2* | | xx | | | x | | | SMS |
| *3* | | xx | | | xx | | | SMMS |
| *4* | | x | | x | xx | | | SMMS |
| *5* | | | | x | xx | x | | SMMC |
| *6* | | | x | | xx | x | x | CMMSCK |
| *7* | | | x | | xx | xx | | CMMSC |

Wie aus obiger Tabelle ersichtlich, können Mikrofaser-Verbundvliesstoffe erfindungsgemäß ausgehend von Einzellagen S', M', C und CK sowie ausgehend von die Lagen S', M', C und CK aufweisenden Vlieskomposits hergestellt werden.
Durch Variation von Art, Zahl und Anordnung der verwendeten Einzellagen kann dabei eine Vielzahl von Mikrofaser-Verbundvliesstoffen mit unterschiedlichsten Eigenschaften erhalten werden.

### Beispiel 2: Bestimmung textilphysikalischer Parameter der Mikrofaser-Verbundvliesstoffe 1-7

Es werden textilphysikalische Daten der 7 erfindungsgemäßen Mikrofaser-Verbundvliesstoffe bestimmt und in nachfolgender Tabelle dargestellt.

**Tabelle 2: Textilphysikalische Beschreibung der Ausführungsbeispiele 1-7; der Schallkennimpedanz von 1 rayl entspricht in SI Einheiten 1 N s/m³.**

| MF Verbund | Gewicht | LD | LD | afr | Dicke | HZK | HZK | HZD | HZD |
|---|---|---|---|---|---|---|---|---|---|
| | | 100 Pa/5cm² | 200 Pa/20 cm² | 200 Pa | | MD | CD | MD | CD |
| | [g/m²] | [l/m²sec] | [l/m²sec] | [rayls] | [mm] | [N/50mm] | [N/50mm] | [%] | [%] |
| | EN 29073 angel. | DIN EN ISO 9237 | DIN EN ISO 9237 | | DIN EN ISO 9073-2 | EN 29073 T3 | EN 29073 T3 | EN 29073 T3 | EN 29073 T3 |
| *1* | 70 | 289 | 454 | 440 | 0,39 | 127 | 85 | 51 | 60 |
| *2* | 111 | 86 | 195 | 1025 | 0,46 | 202 | 205 | 47 | 73 |
| *3* | 138 | 52 | 105 | 1904 | 0,55 | 273 | 185 | 52 | 67 |
| *4* | 207 | 29 | 61 | 3278 | 0,81 | 430 | 398 | 61 | 77 |
| *5* | 286 | 38 | 79 | 2531 | 1,16 | 742 | 460 | 52 | 65 |
| *6* | 256 | 39 | 76 | 2631 | 1,19 | 697 | 373 | 48 | 72 |
| *7* | 258 | 38 | 78 | 2564 | 1,23 | 678 | 361 | 49 | 68 |

Die Ergebnisse der Prüfungen V - VI sind in den folgenden Tabellen dargestellt:

**Tabelle 3: Heisszugversuch der Ausführungsbeispiele 1-4; Modulwerte bei 180 °C im direkten Vergleich mit herkömmlichen Mikrofaser basierten Einzellagen im Gewichtsbereich 40 - 100 g/m².**

| Verformung [%] bei 180°C | 3 | 5 | 10 | 15 | 20 | 30 | 3 | 5 | 10 | 15 | 20 | 30 |
|---|---|---|---|---|---|---|---|---|---|---|---|---|
| Prüfung | EN 29 073 T3 | | | | | | | | | | | |
| Orientierung | MD | | | | | | CD | | | | | |
| Einheit | [N/50 mm] | | | | | | [N/50 mm] | | | | | |
| *1* | 5,0 | 6,9 | 11,2 | 16,2 | 21,4 | 32,5 | 3,0 | 3,6 | 6,1 | 8,4 | 11,7 | 19,7 |
| *2* | 10,2 | 13,8 | 22,2 | 30,7 | 39,8 | 60,0 | 4,2 | 5,7 | 9,8 | 14,5 | 20,5 | 34,3 |
| *3* | 12,8 | 16,8 | 26,8 | 37,2 | 47,7 | 70,5 | 4,4 | 5,9 | 10,9 | 15,6 | 21,8 | 36,8 |
| *4* | 21,6 | 30,7 | 50,8 | 71,6 | 93,4 | 141,6 | 8,9 | 12,4 | 21,3 | 31,7 | 43,3 | 141,6 |
| MF 40 | 4,7 | 6,3 | 9,8 | 13,5 | 17,4 | 25,8 | 2,6 | 3,0 | 4,2 | 5,6 | 7,5 | 12,1 |
| MF 60 | 7,1 | 9,8 | 15,4 | 21,0 | 27,1 | 40,1 | 3,8 | 4,7 | 7,1 | 9,9 | 13,3 | 22,0 |
| MF 80 | 9,2 | 12,7 | 19,4 | 26,3 | 33,8 | 50,2 | 4,4 | 5,7 | 8,7 | 12,2 | 16,5 | 27,7 |
| MF 100 | 15,4 | 20,7 | 30,4 | 40,0 | 50,6 | 73,6 | 6,1 | 8,0 | 12,4 | 17,2 | 23,0 | 38,0 |

Die in Tabelle 3, 4 und 5 zum Vergleich wiedergegeben Materialien MF (Mikrofaser) stellen die im Bezug auf den erfindungsgemäßen Mikrofaser-Verbundvliesstoff beschriebene Einzellage S aus schmelzgesponnenen und zu einem Vlies abgelegten Verbundfilamenten dar. Die wiedergegebenen Daten entsprechen dieser Einzellage S nach erfolgter Hydrofluidbehandlung.

**Tabelle 4: Heisszugversuch / Höchstzugkraft und Höchstzugraftdehnung der Ausführungsbeispiele 1-4 bei 180 °C im direkten Vergleich mit herkömmlichen Mikrofaser basierten Einzellagen im Gewichtsbereich 40 - 100 g/m².**

| Heißzugversuche @ 180°C | HZK / HZD | | | |
|---|---|---|---|---|
| Prüfung | | | | |
| Orientierung | MD | | CD | |
| Einheit | [N/50mm] | [%] | [N/50mm] | [%] |
| *1* | 73,4 | 63,7 | 52,7 | 64,2 |
| *2* | 140,4 | 71,4 | 121,2 | 80,8 |
| *3* | 152,5 | 66,8 | 129,3 | 83,8 |
| *4* | 313,4 | 69,1 | 239,3 | 84,4 |
| MF 40 | 42,8 | 50,5 | 29,5 | 61,9 |
| MF 60 | 67,2 | 50,8 | 56,1 | 62,7 |
| MF 80 | 94,8 | 56,8 | 82,4 | 68,6 |
| MF 100 | 139,3 | 59,2 | 113,7 | 72,0 |

**Tabelle 5: ÖTI / Verformungstest der Ausführungsbeispiele 1-4 bei 160 °C im direkten Vergleich mit herkömmlichen Mikrofaser basierten Einzellagen im Gewichtsbereich 40 - 100 g/m².**

| Messgröße | OTI | | | |
|---|---|---|---|---|
| Prüfung | 160°C | | | |
| Orientierung | max. Force | Path | M 5cm | M9 cm |
| Einheit | [N] | [cm] | [N] | [N] |
| *1* | 570,4 | 10,2 | 76,7 | 429,8 |
| *2* | 975,5 | 10,0 | 99,2 | 742,6 |
| *3* | 1049,8 | 10,5 | 84,9 | 694,0 |
| *4* | 1840,7 | 10,3 | 154,3 | 1281,3 |
| MF40 | 255,8 | 7,9 | 61,5 | 104,2 |
| MF60 | 440,3 | 8,3 | 97,3 | 243,9 |
| MF80 | 600,0 | 8,6 | 98,6 | 486,9 |
| MF100 | 805,2 | 8,7 | 122,6 | 688,6 |

Die Ergebnisse der Prüfungen VII - VIII sind in den folgenden Tabellen dargestellt:

**Tabelle 6: Bestimmung der Porositätseigenschaften der Ausführungsbeispiele 1-4.**

| Nummer | Verbund | Gewicht | afr | bubble point | mean flow pore diameter | smallest pore diameter | largest pore diameter |
|---|---|---|---|---|---|---|---|
| | | [g/m²] | [rayls] | [µm] | [µm] | [µm] | [µm] |
| *1* | SM | 70 | 440 | 121 | 16,8 | 10,94 | 141,3 |
| *2* | SMS | 111 | 1025 | 47 | 9,3 | 6,55 | 50,5 |
| *3* | SMMS | 138 | 1904 | 36,8 | 7,3 | 5,26 | 41,6 |
| *4* | SMMS | 207 | 3278 | 22,9 | 7,3 | 2,65 | 24,4 |

**Tabelle 7: Druckverlust und Fraktionsabscheidegrad der Ausführungsbeispiele 1-4 bei Teilchengrößen von 0,5, 1, 3, 5 und 10 µm.**

| Nummer | Δp [Pa] | Fraktionsabscheidegrad Neuzustand [%] bei Teilchengröße [µm] | | | | |
|---|---|---|---|---|---|---|
| | | 0,5 | 1 | 3 | 5 | 10 |
| *1* | 21 | 67 | 72 | 86 | 91 | 94 |
| *2* | 60 | 94 | 96 | 99 | >99,5 | >99,5 |
| *3* | 90 | 97 | 98 | >99,5 | >99,5 | >99,9 |
| *4* | 139 | >99,5 | >99,9 | >99,9 | >99,9 | >99,9 |

**Tabelle 8: Filtrationseffizienz der Ausführungsbeispiele 1-4 bei Teilchengrößen von 1 µm - 4,7 µm und > 5 µm.**

| Nummer | | | 1 | 2 | 3 | *4* |
|---|---|---|---|---|---|---|
| Effizienz | 1-4,7 µm | [%] | 72 | 96 | 98 | >99,9 |
| Effizienz | >5 µm | [%] | 91 | 99 | 99 | >99,9 |

Die ermittelten Ergebnisse hinsichtlich der Fraktionsabscheidegrade zeigen auf, dass die Grenzwerte des TÜV Rheinland eingehalten werden und die Ausführungsbeispiele 1 - 4 in ungewaschenem Zustand zur Herstellung von Allergikerbettwäsche geeignet sind.

### Kurzbeschreibung der Figuren:

- Figuren 1 und 2:: Heisszugversuch des Ausführungsbeispiels 1; Modulwerte bei 180 °C im direkten Vergleich mit herkömmlichen Mikrofaser basierten Einzellagen im Gewichtsbereich 40 und 60 g/m².
- Figur 3:: Schallabsorbtionsgrad / Impedanz des Ausführungsbeispieles 1 im Vergleich zu den in Ausführungsbeispiel 1 genutzten Einzellagen.
- Figur 4:: Schallabsorbtionsgrad / Impedanz des Ausführungsbeispieles 1 im Vergleich zu Einzellagen des Typs S nach Hydrofluidbehandlung (MF = Mikrofaser).
- Figur 5:: Rasterelektronenmikroskopisch erzeugtes Querschnittsbild eines erfindungsgemäßen Mikrofaser-Verbundvliesstoffs bestehend aus einer Lage S, einer Lage M und einer Lage C.

### Figurenbeschreibung

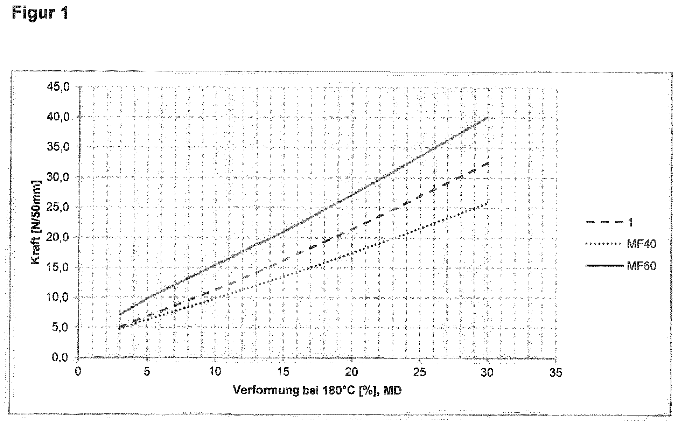

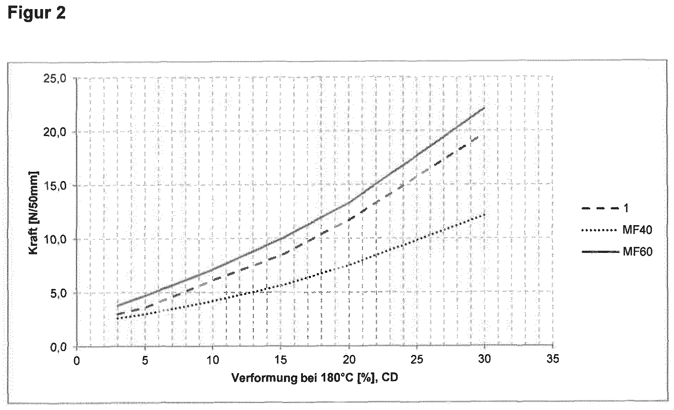

Figuren 1 und 2 zeigen Ergebnisse des Heisszugversuches des Ausführungsbeispiels 1 in Längs- und Querrichtung, sowie die bestimmten Modulwerte bei 180 °C im direkten Vergleich mit herkömmlichen Mikrofaser basierten Einzellagen im Gewichtsbereich 40 und 60 g/m².

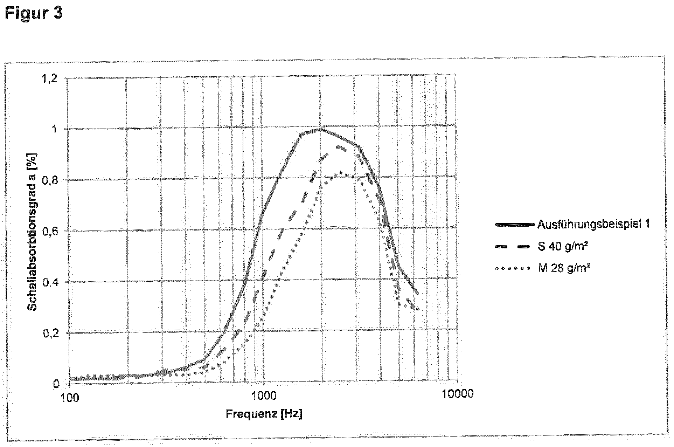

Figur 3 zeigt den Schallabsorbtionsgrad / Impedanz des Ausführungsbeispieles 1 im Vergleich zu den in Ausführungsbeispiel 1 genutzten Einzellagen. Es zeigt sich, dass die spezielle Kombination der Splitfasern mit den Schmelzblasfasern besonders auch im Sinn der Schallabsorbtion unerwartet günstig ist. In einem erfindungsgemäßen Mikrofaser-Verbundvliesstoff SM zeigt sich bei Betrachtung der Schallabsorbtion ein überraschend synergistischer Effekt von Splitfasern und Schmelzblasfasern. Dabei liegt der Schallabsorbtionskoeffizient des durch Hydrofluidbehandlung hergestellten Lagenverbundes SM über den Frequenzbereich deutlich über dem Niveau, den man durch reine Kombination der Ausgangsmaterialien oder Bewertung des zu messenden Luftdurchgangswiderstandes (440 rayls beim Ausführungsbeispiel 1) erwartet. Dieses Ergebnis ist insofern besonders überraschend, als zu erwarten war, dass der durch Schmelzblasfasern üblicherweise erzeugte, starke Barriere Effekt zu überproportional hohem Luftdurchgangswiderstand führt und sich somit zur Erzeugung eines ausgewogenen Schallabsorptionsprofiles als unvorteilhaft erweist.

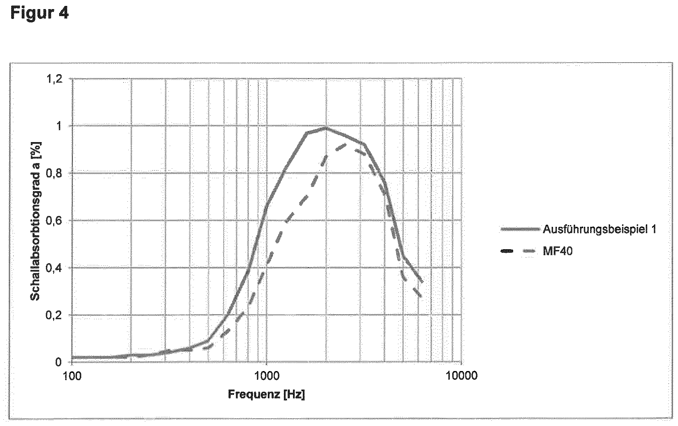

Figur 4 zeigt den Schallabsorbtionsgrad / Impedanz des Ausführungsbeispieles 1 im Vergleich zu Einzellagen des Typs S nach Hydrofluidbehandlung (MF = Mikrofaser). Wie in Figur 4 deutlich wird, erweist sich die spezielle Kombination der Splitfasern mit den Schmelzblasfasern im Sinn der Schallabsorbtion als unerwartet günstig. In einem erfindungsgemäßen Mikrofaser-Verbundvliesstoff SM (Basisgewicht 70 g/m²) zeigt sich bei Betrachtung der Schallabsorbtion im Vergleich zu rein Mikrofaser basierten Vlieslagen in den Basisgewichten von 40 und 80 g/m² ein überraschend synergistischer Effekt von Splitfasern und Schmelzblasfasern. Dabei liegt der Schallabsorbtionskoeffizient des durch Hydrofluidbehandlung hergestellten Lagenverbundes SM bei 70 g/m² Basisgewicht deutlich über dem Niveau des Schallabsorbtionskoeffizientes der Mikrofaser basierten Vlieslage S im Basisgewicht von 80 g/m².

Die hinsichtlich der Schallabsorbtionseigenschaften ermittelten Ergebnisse-besonders auch unter Berücksichtigung der Materialeigenschaften bei Belastung in heißem Zustand - zeigen auf, dass erfindungsgemäße Mikrofaser-Verbundvliesstoffe im besonderen Maße günstig zur Herstellung akustisch wirksamer Bauteile verwendet werden können.

Ohne sich auf einen Mechanismus festzulegen wird vermutet, dass die gute Performance des erfindungsgemäßen Vliesstoffs durch Durchmischung der Einzelkomponenten erzielt wird.

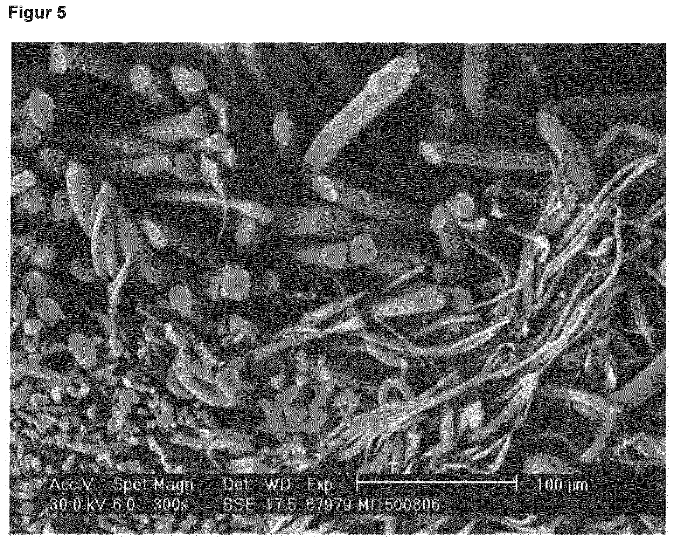

Figur 5 zeigt ein rasterelektronenmikroskopisch erzeugtes Querschnittsbild eines erfindungsgemäßen Mikrofaser-Verbundvliesstoffs bestehend aus einer Lage S, einer Lage M und einer Lage C (Stapelfasern). Man erkennt eine deutliche Durchmischung aller drei Lagen.

## Patentansprüche

1. Mikrofaser-Verbundvliesstoff, umfassend mindestens eine Lage S, die eine erste Faserkomponente enthält und mindestens eine Lage M, die eine zweite Faserkomponente enthält, wobei die zweite Faserkomponente zumindest teilweise in die Lage S eingedrungen ist, wobei die Fasern der ersten Faserkomponente schmelzgesponnene und zu einem Vlies abgelegte Verbundfilamente sind, die zumindest teilweise zu Elementar-Filamenten mit einem mittleren Titer von weniger als 1 dtex, gesplittet und verfestigt sind, **dadurch gekennzeichnet, dass** die Fasern der zweiten Faserkomponente Schmelzblasfasern sind.

2. Mikrofaser-Verbundvliesstoff nach Anspruch 1, **gekennzeichnet durch** einen mittleren Porendurchmesser von weniger als 20 µm und/oder einen kleinsten Porendurchmesser weniger als 11 µm.

3. Mikrofaser-Verbundvliesstoff nach Anspruch 1 oder 2, **dadurch gekennzeichnet, dass** die erste Faserkomponente zumindest teilweise in die Lage M eingedrungen ist.

4. Mikrofaser-Verbundvliesstoff nach einem oder mehreren der vorangehenden Ansprüche, **dadurch gekennzeichnet, dass** das zumindest teilweise Eindringen der zweite Faserkomponente in die Lage S und/oder der ersten Faserkomponente in die Lage M mittels Hydrofluidbehandlung, insbesondere mittels Wasserstrahlverfestigung, durchgeführt wurde.

5. Mikrofaser-Verbundvliesstoff nach einem oder mehreren der vorangehenden Ansprüche, **dadurch gekennzeichnet, dass** der Titer der Elementar-Filamente von 0,01 dtex bis 0,8 dtex beträgt.

6. Mikrofaser-Verbundvliesstoff nach einem oder mehreren der vorangehenden Ansprüche, **dadurch gekennzeichnet, dass** der Anteil der Elementarfilamente der ersten Faserkomponente, bezogen auf das Gesamtgewicht des Vliesstoffs mindestens 20 Gew.% beträgt.

7. Mikrofaser-Verbundvliesstoff nach einem oder mehreren der vorangehenden Ansprüche, **dadurch gekennzeichnet, dass** die Schmelzblasfasern aus Polymeren mit einem MFI-Wert gemäß ISO 1133 von 100 bis 3000 g/ 10 min gebildet sind.

8. Mikrofaser-Verbundvliesstoff nach einem oder mehreren der vorangehenden Ansprüche, **dadurch gekennzeichnet, dass** die Schmelzblasfasern einen Fasertiter von 0,5 µm bis 5 µm, vorzugsweise von 1,0 µm bis 4 µm, insbesondere von 1,8 µm bis 3,6 µm aufweisen.

9. Mikrofaser-Verbundvliesstoff nach einem oder mehreren der vorangehenden Ansprüche, **dadurch gekennzeichnet, dass** der Anteil der Schmelzblasfasern im Mikrofaser-Verbundvliesstoff mindestens 20 Gew.% bezogen auf das Gesamtgewicht des Mikrofaser-Verbundvliesstoffs beträgt.

10. Mikrofaser-Verbundvliesstoff nach einem oder mehreren der vorangehenden Ansprüche, **dadurch gekennzeichnet, dass** der Mikrofaser-Verbundvliesstoff mindestens eine weitere Lage C aufweist, die Stapelfasern und/oder Filamente enthält, wobei sich die Fasern und/oder Filamente der Lagen S, M und/oder C vorzugsweise gegenseitig zumindest teilweise durchdringen.

11. Mikrofaser-Verbundvliesstoff nach einem oder mehreren der vorangehenden Ansprüche, **gekennzeichnet durch** einen Schallabsorbtionsgrad (1000 Hz) von mehr als 0,4 und/oder durch einen Schallabsorbtionsgrad (2000 Hz) von mehr als 0,8 und/oder durch einen Schallabsorbtionsgrad (2000 Hz) von mehr als 0,8, jeweils bei einem Flächengewicht unter 150 g/m².

12. Mikrofaser-Verbundvliesstoff nach einem oder mehreren der vorangehenden Ansprüche, **gekennzeichnet durch** einen mean flow pore diameter von weniger als 20 µm bei einem Flächengewicht unter 200 g/m².

13. Mikrofaser-Verbundvliesstoff nach einem oder mehreren der vorangehenden Ansprüche, **gekennzeichnet durch** einen Fraktionsabscheidegrad (Partikelgröße 1-4,7 mm) von mehr als 60% und/oder durch einen Fraktionsabscheidegrad (Partikelgröße >5 mm) von mehr als 80.

14. Verfahren zur Herstellung eines Mikrofaser-Verbundvliesstoffs nach einem oder mehreren der vorangehenden Ansprüche umfassend die folgenden Schritte:
- Herstellen und/oder Bereitstellen mindestens einer ersten Lage S', die schmelzgesponnene und zu einem Vlies abgelegte Verbundfilamente enthält und/oder eines die Lage S' als Oberflächenlage umfassendes Vlieskomposits;
- Aufbringen mindestens einer zweiten Lage M', die Schmelzblasfasern enthält, auf die Lage S' und/oder auf diejenige Seite des Vlieskomposits, das die Lage S' als Oberflächenlage aufweist, unter Ausbildung eines die Lagen S' und M' aufweisenden Vlieskomposits; und/oder
- Aufbringen mindestens eines die Lage M' als Oberflächenlage umfassenden Vlieskomposits auf die Lage S', und/oder auf diejenige Seite des Vlieskomposits, das die Lage S' als Oberflächenlage aufweist, jeweils derart, dass M' und S' benachbarte Lagen bilden unter Ausbildung eines die Lagen S' und M' aufweisenden Vlieskomposits;
- Hydrofluidbehandlung des die Lagen S' und M' aufweisenden Vlieskomposits, wodurch die Verbundfilamente der ersten Lage S' zumindest teilweise zu Elementar-Filamenten mit einem mittleren Titer von weniger als 1 dtex, gesplittet und gleichzeitig verfestigt und mit den Schmelzblasfasern der zweiten Lage M' zu einem Lagenverbund verbunden werden und wobei die Schmelzblasfasern der Lage M' zumindest teilweise in die Lage S' eindringen.

15. Verwendung eines Mikrofaser-Verbundvliesstoff nach einem oder mehreren der Ansprüche 1 bis 13 als Schallschutzlage und/oder als Bestandteil von Schallschutzlagen, beispielsweise im Baubereich und/oder in Kraftfahrzeugen; als Barrierelage in Heimtextilien, beispielsweise in milbendichten Produkten, Allergikerbettwäschen und Reiningungsmedien, als Verpackungsmaterial und/oder Filtermedium.

## Claims

1. Microfibre composite nonwoven comprising at least one ply S which comprises a first fibre component, and comprising at least one ply M which comprises a second fibre component, where the second fibre component has at least to some extent penetrated into the ply S, where the fibres of the first fibre component are melt-spun composite filaments which have been laid to give a web and which at least to some extent have been split into elemental filaments with average linear density less than 1 dtex, and consolidated, **characterized in that** the fibres of the second fibre component are melt-blown fibres.

2. Microfibre composite nonwoven according to Claim 1, **characterized by** average pore diameter less than 20 µm and/or smallest pore diameter less than 11 µm.

3. Microfibre composite nonwoven according to Claim 1 or 2, **characterized in that** the first fibre component has at least to some extent penetrated into the ply M.

4. Microfibre composite nonwoven according to one or more of the preceding claims, **characterized in that** the penetration, at least to some extent, of the second fibre component into the ply S and/or of the first fibre component into the ply M has been achieved by means of hydrofluid treatment, in particular by means of hydroentanglement.

5. Microfibre composite nonwoven according to one or more of the preceding claims, **characterized in that** the linear density of the elemental filaments is from 0.01 dtex to 0.8 dtex.

6. Microfibre composite nonwoven according to one or more of the preceding claims, **characterized in that** the proportion of the elemental filaments of the first fibre component, based on the total weight of the nonwoven, is at least 20% by weight.

7. Microfibre composite nonwoven according to one or more of the preceding claims, **characterized in that** the melt-blown fibres are composed of polymers with MFI value from 100 to 3000 g/10 min in accordance with ISO 1133.

8. Microfibre composite nonwoven according to one or more of the preceding claims, **characterized in that** the linear fibre density of the melt-blown fibres is from 0.5 µm to 5 µm, preferably from 1.0 µm to 4 µm, in particular from 1.8 µm to 3.6 µm.

9. Microfibre composite nonwoven according to one or more of the preceding claims, **characterized in that** the proportion of the melt-blown fibres in the microfibre composite nonwoven is at least 20% by weight, based on the total weight of the microfibre composite nonwoven.

10. Microfibre composite nonwoven according to one or more of the preceding claims, **characterized in that** the microfibre composite nonwoven has at least one further ply C which comprises filaments and/or staple fibres, where the fibres and/or filaments of the plies S, M and/or C preferably at least to some extent penetrate into one another.

11. Microfibre composite nonwoven according to one or more of the preceding claims, **characterized by** an acoustic absorption coefficient (1000 Hz) above 0.4 and/or by an acoustic absorption coefficient (2000 Hz) above 0.8 and/or by an acoustic absorption coefficient (2000 Hz) above 0.8, in each case for weight per unit area below 150 g/m².

12. Microfibre composite nonwoven according to one or more of the preceding claims, **characterized by** a mean flow pore diameter less than 20 µm for weight per unit area below 200 g/m².

13. Microfibre composite nonwoven according to one or more of the preceding claims, **characterized by** fractional separation efficiency more than 60% (particle size from 1 to 4.7 mm) and/or by fractional separation efficiency more than 80 (particle size >5 mm).

14. Process for the production of a microfibre composite nonwoven according to one or more of the preceding claims comprising the following steps:
- Production and/or provision of at least one first ply S' which comprises melt-spun composite filaments laid to give a web, and/or of a web composite comprising the ply S' as surface ply;
- Application, onto the ply S' and/or onto that side of the web composite that has the ply S' as surface ply, of at least one second ply M' which comprises melt-blown fibres, with formation of a web composite having the plies S' and M'; and/or
- Application, onto the ply S' and/or onto that side of the web composite that has the ply S' as surface ply, of at least one web composite comprising the ply M' as surface ply, in each case in a manner such that M' and S' form adjacent plies, with formation of a web composite having the plies S' and M';
- Hydrofluid treatment of the web composite having the plies S' and M', as a result of which the composite filaments of the first ply S' are at least to some extent split to give elemental filaments with average linear density less than 1 dtex, and simultaneously are consolidated and bonded to the melt-blown fibres of the second ply M' to give a ply assembly and where the melt-blown fibres of the ply M' at least to some extent penetrate into the ply S'.

15. Use of a microfibre composite nonwoven according to one or more of Claims 1 to 13 as soundproofing layer and/or as constituent of soundproofing layers, for example in the construction sector and/or in motor vehicles; as barrier layer in domestic textiles, for example in mite-resistant products, in bed linen for allergy sufferers and in materials used for cleaning purposes, or as packaging material and/or filter medium.

## Revendications

1. Non-tissé composite de microfibres, comprenant au moins une couche S, qui contient un premier composant fibreux et au moins une couche M, qui contient un deuxième composant fibreux, le deuxième composant fibreux pénétrant au moins partiellement dans la couche S, les fibres du premier composant fibreux étant des filaments composites filés à l'état fondu et déposés en un non-tissé, qui sont au moins partiellement divisés en filaments élémentaires ayant un titre moyen de moins de 1 dtex, et consolidés, **caractérisé en ce que** les fibres du deuxième composant fibreux sont des fibres soufflées à l'état fondu.

2. Non-tissé composite de microfibres selon la revendication 1, **caractérisé par** un diamètre de pore moyen de moins de 20 µm et/ou un diamètre de pore le plus petit de moins de 11 µm.

3. Non-tissé composite de microfibres selon la revendication 1 ou 2, **caractérisé en ce que** le premier composant fibreux pénètre au moins partiellement dans la couche M.

4. Non-tissé composite de microfibres selon une ou plusieurs des revendications précédentes, **caractérisé en ce que** la pénétration au moins partielle du deuxième composant fibreux dans la couche S et/ou du premier composant fibreux dans la couche M a été réalisée au moyen d'un traitement hydrofluidique, notamment au moyen d'une consolidation par jet d'eau.

5. Non-tissé composite de microfibres selon une ou plusieurs des revendications précédentes, **caractérisé en ce que** le titre des filaments élémentaires est de 0,01 dtex à 0,8 dtex.

6. Non-tissé composite de microfibres selon une ou plusieurs des revendications précédentes, **caractérisé en ce que** la proportion des filaments élémentaires du premier composant fibreux, par rapport au poids total du non-tissé, est d'au moins 20 % en poids.

7. Non-tissé composite de microfibres selon une ou plusieurs des revendications précédentes, **caractérisé en ce que** les fibres soufflées à l'état fondu sont formées à partir de polymères ayant une valeur MFI selon ISO 1133 de 100 à 3 000 g/10 minutes.

8. Non-tissé composite de microfibres selon une ou plusieurs des revendications précédentes, **caractérisé en ce que** les fibres soufflées à l'état fondu présentent un titre de fibres de 0,5 µm à 5 µm, de préférence de 1,0 µm à 4 µm, notamment de 1,8 µm à 3,6 µm.

9. Non-tissé composite de microfibres selon une ou plusieurs des revendications précédentes, **caractérisé en ce que** la proportion des fibres soufflées à l'état fondu dans le non-tissé composite de microfibres est d'au moins 20 % en poids, par rapport au poids total du non-tissé composite de microfibres.

10. Non-tissé composite de microfibres selon une ou plusieurs des revendications précédentes, **caractérisé en ce que** le non-tissé composite de microfibres comprend au moins une couche C supplémentaire, qui contient des fibres discontinues et/ou des filaments, les fibres et/ou les filaments des couches S, M et/ou C s'interpénétrant au moins partiellement, de préférence mutuellement.

11. Non-tissé composite de microfibres selon une ou plusieurs des revendications précédentes, **caractérisé par** un degré d'absorption acoustique (1 000 Hz) de plus de 0,4 et/ou par un degré d'absorption acoustique (2 000 Hz) de plus de 0,8 et/ou par un degré d'absorption acoustique (2 000 Hz) de plus de 0,8, à chaque fois à un poids superficiel de moins de 150 g/m².

12. Non-tissé composite de microfibres selon une ou plusieurs des revendications précédentes, **caractérisé par** un diamètre de pore à débit moyen (mean flow pore diameter) de moins de 20 µm à un poids superficiel de moins de 200 g/m².

13. Non-tissé composite de microfibres selon une ou plusieurs des revendications précédentes, **caractérisé par** un degré de séparation des fractions (taille de particule 1 à 4,7 mm) de plus de 60 % et/ou par un degré de séparation des fractions (taille de particule > 5 mm) de plus de 80.

14. Procédé de fabrication d'un non-tissé composite de microfibres selon une ou plusieurs des revendications précédentes, comprenant les étapes suivantes :
- la fabrication et/ou la mise à disposition d'au moins une première couche S', qui contient des filaments composites filés à l'état fondu et déposés en un non-tissé, et/ou d'un composite de non-tissé comprenant la couche S' en tant que couche de surface ;
- l'application d'au moins une deuxième couche M', qui contient des fibres soufflées à l'état fondu, sur la couche S' et/ou sur le côté du composite de non-tissé qui présente la couche S' en tant que couche de surface, avec formation d'un composite de non-tissé comprenant les couches S' et M' ; et/ou
- l'application d'au moins un composite de non-tissé comprenant la couche M' en tant que couche de surface sur la couche S' et/ou sur le côté du composite de non-tissé qui présente la couche S' en tant que couche de surface, à chaque fois de telle sorte que M' et S' forment des couches voisines avec formation d'un composite de non-tissé comprenant les couches S' et M' ;
- le traitement hydrofluidique du composite de non-tissé comprenant les couches S' et M', les filaments composites de la première couche S' étant ainsi au moins partiellement divisés en filaments élémentaires ayant un titre moyen de moins de 1 dtex, et simultanément consolidés et reliés avec les fibres soufflées à l'état fondu de la deuxième couche M' pour former un composite de couches, les fibres soufflées à l'état fondu de la couche M' pénétrant au moins partiellement dans la couche S'.

15. Utilisation d'un non-tissé composite de microfibres selon une ou plusieurs des revendications 1 à 13 en tant que couche de protection acoustique et/ou en tant que constituant de couches de protection acoustique, par exemple dans le bâtiment et/ou dans des véhicules automobiles ; en tant que couche de barrière dans des textiles de maison, par exemple dans des produits étanches aux acariens, de la literie antiallergique et des produits de nettoyage, en tant que matériau d'emballage et/ou milieu de filtration.
